Europäisches Patentamt

European Patent Office

Office européen des brevets

(11) Publication number: **0 205 752**
**A1**

## (12) EUROPEAN PATENT APPLICATION

(21) Application number: **86102741.5**

(22) Date of filing: **03.03.86**

(51) Int. Cl.⁴: **G01N 27/82** , G01N 27/72

(30) Priority: **05.03.85 PL 252268**

(43) Date of publication of application:
**30.12.86 Bulletin 86/52**

(84) Designated Contracting States:
**AT CH DE FR GB LI**

(71) Applicant: **Wyzsza Szkola Pedagogiczna im. Komisji Edukacji Narodowej**
**ul. Podchorazych 2**
**30-084 Krakow(PL)**

(72) Inventor: **Martyna, Roman**
**os. Piastów 9/42**
**Kraków(PL)**

(74) Representative: **Martin, Jean-Jacques et al**
**Cabinet REGIMBEAU 26, Avenue Kléber**
**F-75116 Paris(FR)**

(54) Sensor of a magnetic defectograph for determination of long section variations.

(57) The invention solves the problem of designing a sensor of a defectograph enabling measurements of long section variations of a rope by means of magnetic heads with known sensors. The sensor of the defectograph according to the invention has a split magnetic yoke /1/ with a slot /2/ in which a converter /3/ of induction of constant magnetic field into electric voltage is situated, attached directly to a magnetic keeper /4/ of a measuring head, and the keeper /4/ is directly connected with permanent magnets /5/ magnetizing longitudinally the rope /6/ under examination.

Fig.2

EP 0 205 752 A1

## Sensor of a magnetic defectograph for determination of long section variations

The subject of the present invention is a sensor of a magnetic defectograph, serving for determination of long variations of the ferromagnetic section, especially of ropes.

Those skilled in the art know sensors of magnetic defectographs, such as measuring coils, bifilar coils or coils with a ferromagnetic core, which comprise induction converters described in the publication by Z.Kawecki, J.Stachurski "Magnetic defectoscopy of steel ropes", "Slask" Publishing House, Katowice 1969. Those skilled in the art know also from the application no. P-242516 and the Polish patent specification no. 114516 connected Hall-effect-and induction sensors, and Hall-effect sensors as in the application no. P-215521. The said sensors encircle the object being examined and are not connected directly with the keeper of the magnetic circuit.

A disadvantage of sensors with induction converters is the dependence of the signal on the examination rate and the impossibility of measuring the long section variations, and a disadvantage of sensors with Hall-effect converters is their high sensitivity to temperature and stress variations, large overall dimensions and complicated design, as well as a high initial value of induction measured by the Hall-effect converter, leading in consequence to non-linearity and making it impossible to apply magnetoresistors and to apply in magnetic measuring heads the hitherto known sensors.

The object of the invention is to design a sensor of a magnetic defectograph, enabling elimination of disadvantages of the known sensors and measurements of long section variations of a rope by means of magnetic heads with the known sensors.

The essence of the invention consists in that to the keeper of a magnetic measuring head a ferromagnetic yoke is directly attached, said yoke having in its slot induction converters of the magnetic field, such as a Hall generator or a magnetoresistor. Induction of the flux in the slot of the yoke is proportional to the drop of magnetic voltage in the part of the keeper of the magnetic head encircled by the yoke, and the value of the voltage drop is proportional to the section of the segment of the rope being examined, placed inside the measuring head.

An advantage of the defectograph according to the invention is that the obtained signal is independent of the speed of movement of the object being examined and that the influence of temperature variations on the length of the slot in which the Hall generator is placed is eliminated due to the fact that the sensor is made of a material having the same linear expansion as that of the magnetic keeper of the measuring head. Moreover, the location of the yoke of the sensor protects the letter against abrupt temperature variations and the action of stresses, and low induction in the slot enables application of different induction converters of the constant magentic field into electric voltage.

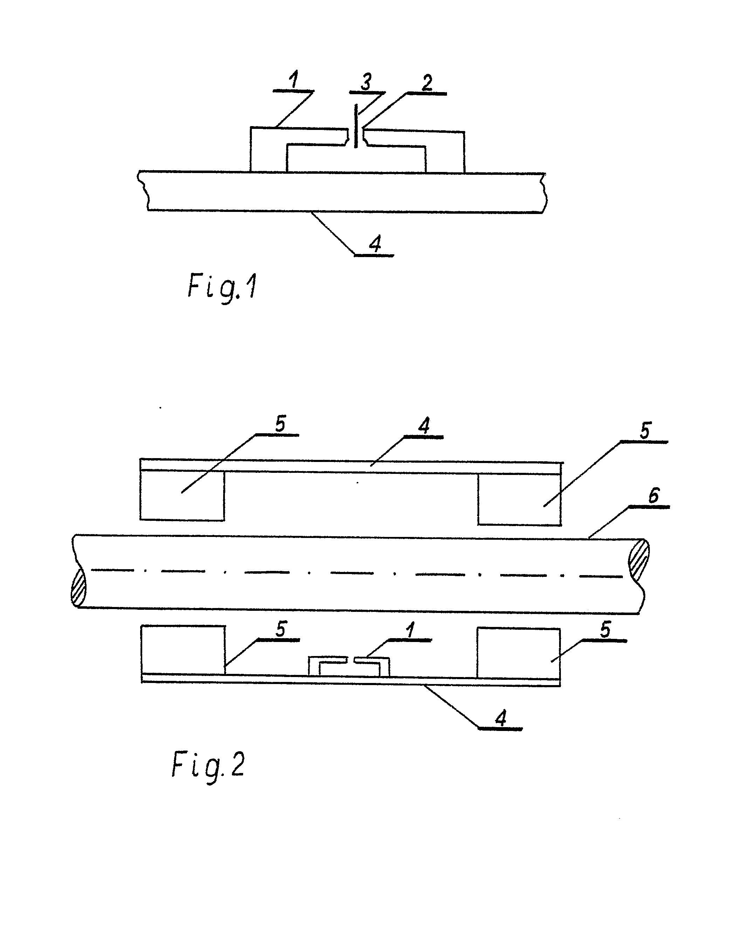

The subject of the invention is shown in the drawing in which fig.1 presents the diagram of the design of the sensor and fig.2 presents a situational diagram.

A split magnetic yoke 1 having a slot 2 situated in the smallest section of the yoke 1, in which a converter 3 of induction of the constant magnetic field into electric voltage is placed, is attached directly to a keeper 4 of a magnetic measuring head /fig.1/. The magnetic keeper 4 of the measuring head with the attached yoke 1 is connected directly with permanent magnets 5 magnetizing longitudinally the rope 6 under examination /fig.2/.

After placing the rope inside the measuring head the magnetic circuit is closed, thus causing the flow of a magnetic flux produced by permanent magnets. A change of the ferromagnetic section of the rope under examination causes a change of reluctance of the segment under examination, what leads to a change of the magnetic flux in the keeper of the head, and thus, in the slot of the yoke of the sensor.

## Claims

1. A sensor of a magnetic defectograph for determination of long section variations, comprising a Hall generator or other converter of magnetic field into electric voltage, placed in a magnetic measuring head, characterized in that a ferromagnetic yoke /1/ having a slot /2/ in which a converter /3 / of magnetic field into voltage is placed, is attached directly with its two ends to a magnetic keeper /4/ which connectes permanent magnets /5/ of the head.

2. A sensor of a defectograph according to claim 1, characterized in that induction of the magnetic flux in the slot /2/ of the yoke /1/ is proportional to the section of the rope /6/ under examination.

Fig.1

Fig.2

## DOCUMENTS CONSIDERED TO BE RELEVANT

EP 86102741.5

| Category | Citation of document with indication, where appropriate, of relevant passages | Relevant to claim | CLASSIFICATION OF THE APPLICATION (Int. Cl.4) |
|---|---|---|---|
| A | DE - A1 - 3 015 894 (SIEMENS) <br> * Totality * | 1 | G 01 N 27/82 <br> G 01 N 27/72 |
| A | DE - A1 - 2 843 570 (PLESSEY) <br> * Claims; page 4, line 1 - page 5, line 16; fig. 2,5 * | 1 | |
| A | DE - B2 - 1 938 107 (WERKSTOFFPRÜF-GERÄTEBAU) <br> * Totality * | 1 | |
| A | GB - A - 1 539 313 (NORANDE MINES) <br> * Page 1, lines 10-14; page 2, line 31 - page 3, line 97; fig. 7-12 * | 1 | |
| A | GB - A - 1 270 748 (ANGLO) <br> * Totality * | 1 | **TECHNICAL FIELDS SEARCHED (Int. Cl.4)** <br><br> G 01 B 7/00 <br> G 01 N 27/00 <br> G 01 R 33/00 |
| A | GB - A - 1 067 769 (UNISEARCH) <br> * Page 1, lines 11-15; claims; fig. 1-3 * | 1 | |
| P,A | US - A - 4 510 447 (EXXON) <br> * Abstract * | 1 | |
| A | EP - A2 - 0 127 443 (CENTRAL) <br> * Abstract * | 1 | |

The present search report has been drawn up for all claims

| Place of search | Date of completion of the search | Examiner |
|---|---|---|
| VIENNA | 09-09-1986 | ERBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# EUROPEAN SEARCH REPORT

European Patent Office

Application number

-2-

## DOCUMENTS CONSIDERED TO BE RELEVANT

EP 86102741.5

| Category | Citation of document with indication, where appropriate, of relevant passages | Relevant to claim | CLASSIFICATION OF THE APPLICATION (Int. Cl.4) |
|---|---|---|---|
| A | EP - A2 - 0 027 368 (COMMONWEALTH)<br>* Abstract; claims; fig. 2,18, 19 *<br>---- | 1 | |
| | | | **TECHNICAL FIELDS SEARCHED (Int. Cl.4)** |

The present search report has been drawn up for all claims

| Place of search | Date of completion of the search | Examiner |
|---|---|---|
| VIENNA | 09-09-1986 | ERBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82